# EUROPÄISCHE PATENTANMELDUNG

(11) **EP 0 574 102 A1**
(43) Veröffentlichungstag der Anmeldung: **15.12.1993**
(21) Anmeldenummer: 93250124.0
(22) Anmeldetag: 29.04.1993
(51) Int. Cl.: F16L 15/06

(54) **Verfahren zur Vorbehandlung der Verbindungselemente einer gasdichten Rohrverbindung**

(30) Priorität: 09.06.1992 DE 4219175
(71) Anmelder: MANNESMANN Aktiengesellschaft, D-40027 Düsseldorf (DE)
(72) Erfinder: Krings, Reiner, W-4000 Düsseldorf 31 (DE); Monser, Helmut, W-4000 Düsseldorf 1 (DE)
(74) Vertreter: Meissner, Peter E., Dipl.-Ing.

(57) **Zusammenfassung**

Bei einem Verfahren zur Vorbehandlung der Verbindungselemente einer gasdichten Rohrverbindung mit metallischem Dichtsitz und Stoßschulter zum mehrfachen Verschrauben von Gewinderohren für die Erdöl- und Erdgasindustrie, bei dem der metallische Dichtsitz und Gewindebereich des als Muffe ausgebildeten Verbindungselementes zunächst mit einem Überzug versehenen und vor dem Verschrauben auf dem gereinigten Dichtsitz- und Gewindebereich der Muffe und der blanken Zapfen ein Schmiermittel aufgetragen wird, ist der Gewindebereich (4,5) der Muffe und der blanken Zapfen (8,9) mit einem Dichtungsfett und der metallische Dichtsitzbereich (14,15) sowie die Stoßschultern (16,17) mit einem für hohe Flächenpressungen geeigneten Schmierstoff versehen.

## Beschreibung

Die Erfindung betrifft ein Verfahren zur Vorbehandlung der Verbindungselemente einer gasdichten Rohrverbindung gemäß dem Gattungsbegriff des Hauptanspruches.

Die Rohrverbindung eines aus miteinander verschraubbaren Gewinderohren bestehenden Stranges für den Einsatz in der Erdöl- und Erdgasindustrie hat zum einen die Aufgabe die Stranglast aufzunehmen und zum anderen die Dichtheit der Verbindung zu sichern. Zur Erfüllung dieser Aufgaben weist der Gewindeabschnitt der Rohrenden und der Muffe zum Beispiel ein konisches API-Gewinde mit einer entsprechenden Überdeckung auf. Bedingt durch die Gewindeüberdeckung entstehen beim Verschrauben hohe Oberflächenpressungen. Zur Beherrschung dieser großen Belastung wurden Oberflächenbeschichtungen und Fette entwickelt, die ein Verschrauben ohne Fressen ermöglicht. Diese Gewindefette sind schmierfähige Pasten mit einem hohen Anteil an feinverteilten Feststoffpartikeln, wie zum Beispiel Graphit, Metalle oder Teflon. Außer einem problemlosen Verschrauben unterstützen diese Fette die hydraulische Dichtheit der Verbindung (Erdöl, Erdgas, 1983, Seite 293 bis 296).

Bei der von verschiedenen Herstellern entwickelten gasdichten Verbindung wird die Dichtheit der Verbindung durch eine Überdeckung im metallischen Dichtsitz erzielt. Die Stoßschultern dienen als Einschraubbegrenzung und sie sorgen dafür, daß mit steigender Stranglast der metallische Dichtsitz aktiviert bleibt. Das konische Gewinde braucht demzufolge keine Dichtfunktion zu übernehmen und seine Aufgabe besteht im Gegensatz zum API-Gewinde nur in der Übertragung der Stranglast.

Um gasdichte Verbindungen im Gewinde- und Dichtsitzbereich zuverlässig verschrauben zu können, werden auch bei diesen Rohrverbindungen bislang Oberflächenbeschichtungen und Feststoffschmierpasten verwendet, um Freßerscheinungen auszuschalten und Mehrfachverschraubungen zu ermöglichen. Der große Nachteil bei Verwendung von Feststoffschmierpasten bzw. Verschraubfetten mit Feststoffen bei gasdichten Verbindungen mit konischen Gewindeabschnitten ist, daß die Feststoffpartikel Brücken bilden können, die die Gasdichtheit im Dichtflächenbereich negativ beeinflussen kann. Außerdem ist bei den Verschraubfetten auf Teflonbasis, welche die beste Gewindedichtfunktion haben, die Verschraubsicherheit und Mehrfach-Verschraubbarkeit durch Neigung zum Kaltverschweißen (Galling) im Dichtsitzbereich eingeschränkt.

Für eine reproduzierbare und aussagefähige Dichtheitsprüfung einer einen metallischen Dichtsitz aufweisenden gasdichten Rohrverbindung ist bereits vorgeschlagen worden (DE-PS 39 13 314), das als Muffe ausgebildete Verbindungselement innen mit einem Überzug beispielsweise aus einer Mangan-Phosphat-Schicht oder Zinn zu versehen und vor dem Verschrauben Öl als Schmiermittel auf die Muffe und auf die blanken Zapfen aufzutragen. Der Nachteil dieses Vorschlages besteht darin, daß der Gewindebereich keinen Beitrag zur Gasdichtheit leistet und auch kleinere Undichtigkeiten des metallischen Dichtsitzes sofort zu einer Undichtigkeit der gesamten Rohrverbindung führt.

Aufgabe der Erfindung ist es, ein verbessertes Verfahren gemäß dem Gatlungsbegriff des Hauptanspruchs zur Vorbehandlung der Verbindungselemente einer gasdichten Rohrverbindung mit metallischem Dichtsitz und Stoßschulter anzugeben, mit dem ein Fressen auch bei Mehrfachverschraubung verhindert wird und bei dem im Dichtflächenbereich eine Brückenbildung vermieden wird, aber andererseits kleine Undichtigkeiten aufgefangen werden.

Diese Aufgabe wird mit den im kennzeichnenden Teil des Hauptanspruches angegebenen Merkmalen gelöst. Vorteilhafte Weiterbildungen sind in den Unteransprüchen festgelegt.

Das erfindungsgemäße Verfahren zeichnet sich dadurch aus, daß die Schmierung aus einer zweistufigen Fettung besteht. Der Bereich der Sekundärdichtung, d. h. der Gewindebereich wird, wie bereits bekannt, durch ein Verschraubfett mit eingelagerten Feststoffpartikeln gefettet. Dabei haben sich Verschraubfette auf Teflonbasis, d. h. mit einem überwiegenden Anteil von Teflon als Feststoffpartikel als besonders günstig im Hinblick auf die gewünschte Dichtfunktion herausgestellt. Die Primärdichtung einer solchen gasdichten Rohrverbindung, d. h. die metallischen Dichtflächen sowie die Stoßschultern werden mit einem für hohe Flächenpressungen geeigneten Schmierstoff gefettet. Ein solcher Schmierstoff kann vorzugsweise ein an sich bekanntes Gleitbahnöl sein oder ein standardisiertes API-Fett ohne Feststoffpartikelanteil. Der Vorteil der vorgeschlagenen zweistufigen Fettung ist darin zu sehen, daß eine sichere Kraftverschraubung insbesondere eine Mehrfachverschraubung bis zu zehnmal bei Förderrohren möglich ist und die Dichtfunktion erhöht wird. Durch die zusätzliche Dichtung im Gewindebereich können nötigenfalls kleinere Undichtigkeiten des metallischen Dichtsitzes aufgefangen werden. Die bisher bekannte Brückenbildung infolge des Feststoffpartikelanteils in den Verschraubfetten im metallischen Dichtsitzbereich tritt durch das erfindungsgemäße Verfahren nicht ein.

Wie bereits aus der genannten Entgegenhaltung (DE-PS 39 13 314) bekannt, wird nur die Muffe vorbehandelt und die Zapfenteile bleiben blank. Der Überzug besteht vorzugsweise aus einer Mangan-Phosphatschicht, die mittels einer Kombination verschiedener Bäder chemisch auf der Oberfläche der Muffe abgeschieden wird. Alternativ kann die Muffe auch mit elektrolytisch abgeschiedenem Zinn oder Kupfer überzogen werden. Diese Alternative bietet sich vor allen Dingen für hochlegierte Werkstoffe wie zum Beispiel ferritische, ferritisch-austenitische und austenitische Stähle an. Bei diesen Stählen kann wegen der Passivierungsneigung der Elemente Chrom und Nickel keine Mangan-Phosphatschicht abgeschieden werden.

Anhand der Zeichnung wird das erfindungsgemäße Verfahren näher erläutert.

Es zeigen:
- Figur 1a: einen Teillängsschnitt durch eine vorbehandelte Muffe

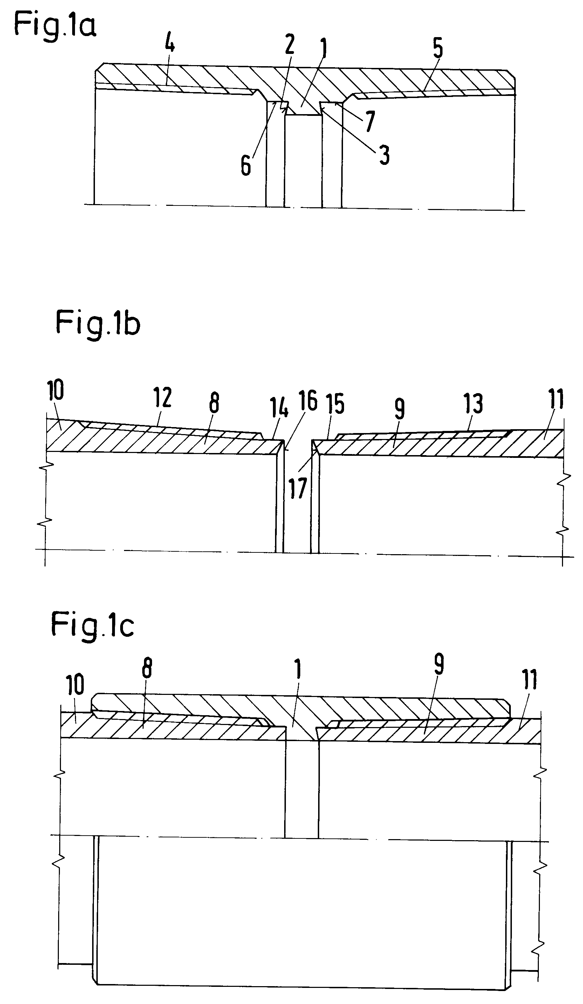

- Figur 1b: einen Teillängsschnitt der unbehandelten Zapfen
- Figur 1c: einen Teillängsschnitt sowie eine Ansicht der Rohrverbindung im verschraubten Zustand

In Figur 1a ist in einem Teillängsschnitt die vorbehandelte Muffe 1 dargestellt. Nach der hier nicht gezeigten chemischen Vorbehandlung sind der Dichtsitzbereich 6,7, beide Stoßschultern 2,3 sowie beide Gewindeabschnitte 4,5 mit einer Mangan-Phosphatschicht überzogen. Die als Zapfen 8,9 ausgebildeten Verbindungselemente der beiden zu verschraubenden Rohre 10,11 bleiben unbehandelt blank (Figur 1b). Jedes Zapfenelement 8,9 weist einen Gewindeabschnitt 12,13, eine Dichtsitzfläche 14,15 und eine Stoßschulter 16,17 auf. Vor dem Verschrauben werden sowohl die Muffe 1 als auch die Zapfen 8,9 vollständig gereinigt und anschließend die Gewindeabschnitte 4,5 der Muffe 1 und die Gewindeabschnitte 12,13 der Zapfenelemente 8,9 mit einem Verschraubfett mit eingelagerten Feststoffpartikeln vorzugsweise aus Teflon eingefettet. Der metallische Dichtsitzbereich 6,7 sowie die Stoßschultern 2,3 der Muffe 1 und der Dichtsitzbereich 14,15 sowie die Stoßschultern 16,17 der Zapfenelemente 8,9 werden im Unterschied dazu mit einem Gleitbahnöl eingepinselt oder wahlweise mit einem API-Fett ohne eingelagerte Feststoffpartikel gefettet.

Figur 1c zeigt die Rohrverbindung im verschraubten Zustand, wobei die Dichtflächen 14,15 der Zapfenelemente 8,9 zusammen mit den Dichtflächen 6,7 der Muffe 1 einen metallischen Dichtsitz bilden. Die Gewindeabschnitte 4,5, 12,13 sind komplementär konisch zueinander ausgebildet. Der gewählte Gewindetyp für die Gewindeabschnitte 4,5, 12,13 ist für das erfindungsgemäße Verfahren von untergeordneter Bedeutung.

## Patentansprüche

1. Verfahren zur Vorbehandlung der Verbindungselemente einer gasdichten Rohrverbindung mit metallischem Dichtsitz und Stoßschulter zum mehrfachen Verschrauben von Gewinderohren für die Erdöl- und Erdgasindustrie, bei dem der metallische Dichtsitz und Gewindebereich des als Muffe ausgebildeten Verbindungselementes zunächst mit einem Überzug versehen und vor dem Verschrauben auf dem gereinigten Dichtsitz- und Gewindebereich der Muffe und der blanken Zapfen ein Schmiermittel aufgetragen wird,
**dadurch gekennzeichnet,**
daß der Gewindebereich der Muffe und der blanken Zapfen mit einem Dichtungsfett und der metallische Dichtsitzbereich sowie die Stoßschultern mit einem für hohe Flächenpressungen geeigneten Schmierstoff versehen werden.

2. Verfahren nach Anspruch 1,
**dadurch gekennzeichnet,**
daß das Dichtungsfett ein Verschraubfett mit Feststoffpartikeln ist.

3. Verfahren nach Anspruch 2,
**dadurch gekennzeichnet,**
daß die Feststoffpartikel überwiegend aus Teflon bestehen.

4. Verfahren nach Anspruch 1,
**dadurch gekennzeichnet,**
daß der Schmierstoff ein Gleitbahnöl ist.

5. Verfahren nach Anspruch 1,
**dadurch gekennzeichnet,**
daß der Schmierstoff ein API-Fett ohne Feststoffpartikel ist.
